# EUROPEAN PATENT APPLICATION

(11) **EP 2 111 010 A1**
(43) Date of publication of application: **21.10.2009**
(21) Application number: 08103598.2
(22) Date of filing: 17.04.2008
(51) Int. Cl.: H04L 29/06, H04W 4/00

(54) **Method for preserving the network address during a vertical handover**

(71) Applicant: Nokia Siemens Networks Oy, 02610 Espoo (FI)
(72) Inventor: Premec, Domagoj, 10010 Zagreb (HR); Savolainen, Teemu, 402150 Espoo (FI)
(74) Representative: Bruglachner, Thomas E.

(57) **Abstract**

A method for allocating the same network address to a first network interface (101, 303, 308) and to a second network interface (102, 305, 310) of a host (100, 301, 302) is described. The method comprises connecting the host (100, 301, 302) to a first network (RAN1) via the first network interface (101, 303, 308) and connecting the host (100, 301, 302) to a second network (RAN2) via the second network interface (102, 305, 310). Then a network address is assigned to the first network interface (101, 303, 308) and the same network address is assigned to the second network interface (102, 305, 310). The host (100, 301, 302) indicates its intention to move a session to the second network interface (102, 305, 310).

## Description

### Technical field of the invention

The present invention relates to the technical field of communication networks. In particular, the present invention relates to a method for assigning the same network address to a first network interface and to a second network interface, to a method for detecting in a network a host, which host is capable to assign the same network address to a first network interface and to a second network interface, to a program element, to a host, to a network apparatus for providing network based mobility to a host and to a router solicitation message.

### Background of the invention

Mobile IPv6 (Internet Protocol Version 6) specifies IP mobility for IPv6 hosts. An IPv6 host is a host, which is based on the Internet protocol version 6. Mobile IPv6 uses a client functionality in the IPv6 stack of a mobile node. Exchange of signalling messages between the mobile node and a home agent enables the creation and maintenance of a binding between the mobile nodes' home address and the mobile node's care-of-address.

The document Gundavelli, S., et al., "Proxy Mobile IPv6", February 2008, draft-ietf-netlmm-proxy-mip6-11.txt specifies network based mobility management, which enables IP (Internet protocol) mobility for a host without requiring the host participation in any mobility related signalling.

The document Damic, D., et al., "Proxy Mobile IPv6 indication and discovery", February 2008, draft-damic-netlmm-pmip6-ind-discover-03.txt proposes mechanisms by which the host is informed of Proxy Mobile IPv6 support, as well as how to actively discover such capability in the network that host attaches to.

The document Narten, T., et al., "Neighbour Discovery for IP version 6 (IPv6)", RFC 4861, September 2007 specifies a neighbour discovery protocol for IP version 6.

The document Conta, A., et al., "Internet Control Message Protocol (ICMPv6) for the Internet Protocol Version 6 (IPv6) Specification", RFC 4443, July 2005, specifies a set of Internet Control Message Protocol (ICMP) messages for use with version 6 of the Internet Protocol (IPv6).

The document Johnson, D., et al., "Mobility Support in IPv6", RFC 3775, June 2004, specifies a protocol which allows nodes to remain reachable while moving around in the IPv6 Internet.

Mobility for IPv6 hosts may require the host to send IP mobility management signalling messages to the home agent, which is located in the network.

Network-based mobility may be another approach to solve the IP mobility challenge. This approach to supporting mobility may not require the mobile node to be involved in the exchange of signalling messages between itself and an home agent. A Proxy Mobility agent located in the network may perform the signalling with the home agent and thus the mobility management on behalf of the mobile node attached to the network. A protocol which may support network based mobility is called Proxy Mobile IPv6 (PMIPv6).

A NETLMM (Network Localized Mobility Management) domain may be defined as a network, which provides network-based IP mobility service by deploying the PMIPv6 protocol and where the security association between at least one MAG (Mobile Access Gateway) and at least one LMA (Local Mobility Anchor) can be set up. A NETLMM domain may comprise several access networks of different types.

By using this protocol, network-based IP mobility service may be provided in a manner that is transparent to the host. The several access networks may comprise different access network technology types, wherein a host may attach to a plurality at the same time.

### Summary of the invention

It may be desired to enable a host to handle a plurality of access networks of different types effectively.

Thus, a method for assigning the same network address to a first network interface and to a second network interface, a method for detecting in a network a host, which host is capable to assign the same network address to a first network interface and to a second network interface, a program element, a host, a network apparatus for providing network based mobility to a host and a router solicitation message is provided.

According to an aspect of the present invention a method for allocating the same network address to a first network interface and to a second network interface of a host is provided. The method comprises attaching the host to a first network via a first network interface, assigning a network address to the first network interface and establishing a connection or session via the first network interface. The host, which may comprise a plurality of interfaces, may detect the availability of a network at a second network interface. The method further comprises, attaching the host to a second network via the second network interface. The same network address, which has been assigned to the first network interface, is assigned to the second network interface.

The session is moved to the second network interface such that the session is continued via the second network interface.

In other words, a session from the host to a destination in the network may be still up and running. However the session may be re-routed or moved from the first network interface and the attached network to the second network interface and the corresponding network. Thus a session between the host and a destination may in a first case be routed via a WiMAX network and after moving the session, the session may be routed via a GPRS network.

After the same network address has been assigned to the second interface, the session can be moved from the first network interface to the second network interface.

In a network based mobility management solution the network may have to be informed that a host intends to move a session. Such an indicator may be receiving within the network the same address information via two physically separated networks from the host. The session may be moved on demand. The host may signal to the network that the host intends to move the connection.

Attaching a host to a network may mean physically connect the host to a network. This connection may be a wired connection or a wireless connection or link. Attaching may also mean connecting the host with the network on a link layer or layer 2 or establish a point-to-point connection.

Once a host is attached to the network, access to the network may be provided on all layers of a communication protocol. Thus, the network may also be called the access network or remote access network.

The address assigned to an interface may be an IP address or layer 3 address.

According to another aspect of the present invention a method for detecting by a communication network a host, which host is capable to assign the same network address to a first network interface and a second network interface is described. The method comprises receiving in a first network apparatus information about the host, wherein information about the host comprises information about the capability of assigning the same network address to a first network interface and to a second network interface. The method further comprises communicating information about the host to a second network apparatus.

Furthermore, information about the intention of the host to move a session may be detected. This intention may be determined by receiving in a first network apparatus the same network address via two different networks.

The information about the host may be the result of a detection method. The host may be detected by a method periodically running on the host and/or the first network apparatus. According to this method the host and the network apparatus exchange messages in the form of router solicitation massage and router advertisement message. During the detection method investigations may be made for detecting, whether a host is capable to assign the same network address to a first network interface and a second network interface.

According to a further aspect of the present invention a program element for assigning the same network address to a first network interface and to a second network interface of a host and/or a program element for detecting a host by a network, which host is capable to assign the same network address to a first network interface and to a second network interface is provided. This program element, when being executed by a processor, is adapted to carry out at least one of the inventive methods.

Each method may be provided as a separate program element.

According to another aspect of the present invention a computer-readable medium comprising a program code for assigning the same network address to a first network interface and to a second network interface of a host and/or for detecting a host by a network, which host is capable to assign the same network address to a first network interface and to a second network interface, which program code is adapted, when being executed by a processor to carry out at least one of the inventive methods.

A computer-readable medium may be e.g. a hard-disk, a floppy disk, a CD ROM, an USB stick or a DVD.

According to yet another aspect of the present invention a host is provided, which host comprises a first network interface, a second network interface, a routing device and an assigning device. The assigning device is connected to the first network interface and to the second network interface. The routing device is connected to the first network interface and to the second network interface. The assigning device is adapted for assigning the same network address to a first interface and to a second interface. The first network interface is adapted to attach the host to a first communication network and the second network interface is adapted to attach the host to a second network interface.

The routing device is adapted to establish or route a session via the first network interface. Furthermore, the routing device is adapted to move the session to the second network interface, such that the session is continued via the second network interface. Continuing a session may mean reestablishing, establishing or re-routing a session. For the movement may different backup switching methods be deployed.

A host, capable to assign the same network address for a plurality of interfaces may also be capable to allocate the same address to a plurality of interfaces or to associate a plurality of interfaces with the same network address.

According to yet another aspect of the present invention a network apparatus for providing network based mobility to a host or for detecting a host, which host is capable to assign the same network address to a first network interface and a second network interface is described. The network apparatus comprises a receiving device and a communicating device, wherein the receiving and the communicating device are connected. The receiving device is adapted to receive in the first network apparatus information about a host. The communicating device is adapted to communicate the information about the host to a second network apparatus. The information about the host comprises information about the capability of assigning the same network address to a first network interface and to a second network interface.

The network apparatus may be located in the network and may allow the network to detect the host.

The information about the host may be the result of a detection process for determining, whether a host is capable to assign the same network address to a first network interface and a second network interface, or if the host intends to move a connection.

According to another aspect, a router solicitation message is provided, comprising a value at the position of a P-flag. The value indicates that a host is capable to assign the same network address to a first network interface and to a second network interface.

A host, a mobile host, a mobile node (MN) or a terminal may comprise a plurality of network interfaces. The host may comprise at least two interfaces which may attach to a communication network. The network interfaces may be different network interface cards, which support different network protocols. The supported protocol may be a wireless protocol or a wired protocols. Examples for wireless protocols are WiFi®, 3G (Third Generation), 3GPP (3rd Generation Partnership Project), WiMAX (Worldwide Interoperability for Microwave Access), E-UTRAN (Evolved Universal Terrestrial Radio Access Network), UTRAN (Universal Terrestrial Radio Access Network), GPRS (General Packet Radio Service), EDGE (Enhanced Data Rates) for GSM (Global System for Mobile Communications) Evolution), IEEE 802.16 or IEEE 802.11 (WLAN, Wireless Local Area Network).

A wired protocol or wire-bound protocol may be Ethernet (IEEE 802.3) or Token Ring.

A mobile host comprising a first network interface card and a second network interface card may allow attaching the host to different networks, i.e. networks, which base on different protocols or technology types.

The different protocols or the different network technologies may each have advantages in certain areas or in certain locations. Thus, it may happen that a network which for example bases on WiMAX technology provides a better signal quality than a network based on GPRS. Whether one technology has advantages over another technology may depend on local conditions, i.e. the quality may depend on environmental conditions at a certain location. For example, in a mountainous region caused by physical effects like reflections, radio protocols based on different frequencies may provide different signal quality.

Thus, it may be desired to allow a host to select the network, which the host uses to communicate with another host or with a destination. The host therefore may determine the environmental conditions like signal strength, radio signal quality or various other policy reasons like price, quality of service or available bandwidth, in order to decide which network the host uses to communicate or to access the network.

The attachment or connection to the first interface and the attachment or the connection to the second interface may be on a physical layer or on link layer. However, the session established via the first network interface may be a layer 3 connection, an IP connection, an IP session or an IP connection. Thus, the host may be attached to a plurality of access networks on a link-layer basis, whereas only one higher layer connection or session may be established. In other words, the host may have a plurality of legs connecting the host with the network. In particular the plurality of legs is oriented on the number of physical interfaces, e.g. the first network interface and the second network interface form two legs to a network.

Thus, the host may have a plurality of options which the host may choose from when establishing a higher layer connection. The higher layer connection may be routed via the first network interface, the second network interface or any other network interface available in the host and attached to a corresponding network. Thus, a host may be connected to a GPRS, a 3G and a WiMAX network at the same time while only using the WiMAX network for an IP connection or an IP session. The reason for only using the WiMAX network may be a cost reason or a better bandwidth than within the 3G or GPRS network. However while moving to another location the situation may change. At the other location may the GPRS network provides a better bandwidth over the 3G or WiMAX network.

The plurality of physical network connections may allow the host to use the physical connections as required. Thus, a backup scenario may be provided. The physical network where upon the higher layer connection may be routed may brake. The host then may decide to use another interface or physical connection of the host to keep the high layer connection alive.

Another option could be to use the plurality of connections to realize a least cost router. The higher layer connection may be routed via the first interface. If the price for using the first network may be more expensive than the price for using the second network, the host may initiate a re-routing of the higher layer connection via the second interface.

For some reason it may be desired that the host indicates the host's capability to move a session across interfaces. However, the host may not move the session. A reason for such a behaviour may be that a WLAN interface is in use and the host wants to open a GPRS interface as a standby interface for possible future use. In other words, the host may not want to move a PMIP (Proxy Mobile IP) session from the already existing WLAN interface to the new GPRS interface. But in the case the WLAN connection may be lost, the host may has a reason for switching to the GPRS interface.

Such a standby function for the second interface may be implemented by preventing the sending of the router solicitation message in the moment of attaching to the second network. Alternatively, instead of preventing the router solicitation message, a router solicitation message may be used having a P-flag set to the value 0. Thus, the network may just provide any IP address.

Later, when the host want to move the session from the WLAN network to the GPRS network, the host may send a router solicitation message comprising a P-flag having a value of 1 via the GPRS network. Thus, the MAG of the GPRS network reached via the GPRS interface, may initiate moving the session by advertising the home network prefix (HNP) in the corresponding GPRS network.

The host may switch the higher layer connection or session back and forth as required by the host. Using buffers within the host may allow realizing a hitless move of the session between the interfaces.

Other mechanisms to signal the network the indication to switch or move a session may be sending the same address on different networks or such mechanisms which may base on link layer.

Being able to assign the same network address to a first network interface and to a second network interface may be a prerequisite for being capable of moving a session from the first network to the second network. A session, in particular an IP (Internet protocol) session may also be a network connection, which is established via a network to a destination being located in the network.

Being able to assign the same network address to different network interfaces may allow to handover between access networks of different technologies. These access networks or remote access networks may be radio access networks like UTRAN, GPRS, WiMAX or fixed network like Ethernet or Token Ring.

A session or connection may relate to a communication network and may allow transporting information in form of cells, packets, frames or telegrams. A connection or session may be connection oriented or connectionless.

Since the host may be a mobile host, the host may move around and the conditions may change while the host is moving. In order to keep an established connection the host may have to assign the same network address to different network interfaces or different network interface cards.

The host may comprise a measuring device which is adapted for measure the present environmental conditions.

An interface of the host may link to a corresponding remote access network. The protocol PMIPv6 may provide IP session continuity, i.e. a mobile node may transfer its IP address from a first remote access network to a second remote access network, wherein the first remote access network and the second remote access network (RAN) are based on different remote access network (RAN) technologies.

Continuity may mean that the session between host and destination may still be established after moving the session. The session however, be routed via a different network.

Some legacy hosts may not be able assigning the same IP address to different network interfaces, network interface cards or network interface units and moving a session across interfaces.

For a network based mobility service like NETLMM (Network Localized Mobility Management) a network apparatus like a Home Agent (HA) or a Local Mobility Anchor (LMA) may require to know whether a host, in particular a mobile host, has the capability to assign or allocate the same address to different network interfaces. Furthermore the LMA may need to know if the host intends to move a session from one interface to another and when the host wants to move the session. An address may be an IP address.

The mobile host may inform the LMA about the capability of the mobile host to assign the same address to different networks, i.e. the capability of the host to transfer an established connection between two interfaces. For transferring such information the host may sends signalling information to the LMA.

A flag in a message belonging to the IP layer may be deployed in order to leave an underlying link layer of different remote access network technologies unchanged. In order to inform the LMA, a P flag in a router solicitation message may be used, which P flag may be set by the mobile node or host earlier during attaching the host to the network. The P flag in the router solicitation message may be sent from the host to the LMA via a Mobility Access Gateway (MAG) in the remote access network.

In the PMIPv6 protocol a binding update message (PBU) may be defined which provides a field called the handoff indicator. Information about the capability of the host to move connections between a plurality of networks, may be packed in the handoff indicator of the PBU message.

In other words, a MAG may receive from a host a P flag in the router solicitation message and the MAG may generate a PBU message with a handoff indicator, which handoff indicator signals that the corresponding mobile host is capable of moving sessions between at least two network interfaces. The P flag and the handoff indicator may also be used in order to signal to the network the intention of the host to move the session. In other words, setting the P flag and the handoff indicator to predefined values may trigger moving a session across the interfaces.

The handoff indicator field in the PBU finally may be evaluated in the LMA. Thus, the LMA may decide whether an address for an established connection, i.e. an IP address, may stay the same and whether a session may be moved.

A MN, which is not capable to switch or move a session across interfaces may be called a legacy MN or legacy host. When a legacy MN connects to a new network, a new address or a new prefix may be sent to the MN. The new address may be a new IP address or a new IP prefix. In other word, a legacy MN may not receive for an additional interface the same address as for the first interface.

A MN which is capable to switch an established connection between two interfaces may receive a previously assigned prefix if the network has the information that the MN is capable to switch a connection between the existing interfaces.

Switching an established connection between two interfaces, i.e. handoff or handover an established connection, may require assigning the same IP address to different network interfaces or different network interface cards.

In the following the basic idea of the present invention is described in greater detail. It may be a gist of the present invention that a mobile node is adapted to handoff between two MAGs located in different access networks. The host may prevent using both interfaces simultaneously for independent sessions, connections, IP sessions or IP connections. Instead of using different connections simultaneously, a mobile host or IP host may want to move an IP session established between the host and a destination in the network from one network interface to another in the case that the host leaves a first remote access network and attaches to a second remote access network.

The first remote access network and the second remote access network may base on different network technologies. In order to move an established session from a previous remote access network to a new remote access network the mobile node may be able to configure the same address for the new access network, which address the host was using for the previous access network. In other words, the host may be adapted or configured such, that the host may be able to configure the same IP address on both interfaces or on a plurality of interfaces.

Conventional hosts or legacy hosts may not have the possibility to assign the same IP address to more than one network interface at the same time. Therefore, when such a legacy host attaches to a NETLMM domain via an additional interface, e.g. a second remote access network, the network may ensure that the legacy host configures different addresses to the interface. Thus, the network may provide different addresses or prefixes to the mobile node depending on whether the host is configured to move an IP session across interfaces or not.

In other words, in the case that the network detects that a host may not be able to configure the same IP address to different interfaces, the network may provide a different network address for each network interface in the host.

In the case where the network determines that a mobile host is capable to move an IP session across a plurality of interfaces, the network provides only one single address or prefix for a connection.

A NETLMM domain may be defined as a network which provides network-based IP mobility service by deploying the PMIP6 protocol and where the security association between MAGs and LMAs can be set up. Thus, a NETLMM domain may comprise several access networks of different types. Therefore, the PMIP6 protocol may be used for interworking with other access networks, such as WiMAX.

In the following, further aspects of the method for assigning the same network address to a first network interface and to a second network interface of a host will be described. These aspects apply also for the method for detecting in a network a host, which host is capable to assign the same network address to a first network interface and to a second network interface, for the program element, for the host, for the network apparatus for providing network based mobility to a host and for the router solicitation message.

According to a further aspect of the present invention a first network interface is based on a first network access technology type. The second network interface is based on a second network access technology type, wherein the first network access technology type differs from the second network access technology type.

Being able to connect to different networks which are based on different access technology types may provide to the host a possibility to select between different quality or property of the corresponding network. Such a selection may allow a host to use a network providing a good quality of transmission. Different network access technology types may be at least technology types selected from the group of access network technology types consisting of WiFi®, 3G, WiMAX, E-UTRAN, UTRAN, GPRS, EDGE, IEEE 802.16, IEEE 802.11, a remote access network technology type, a fixed access network technology type, Ethernet, IEEE 802.3, Token Ring, and AppleTalk.

According to another aspect of the present invention the method for assigning the same network address to a first network interface and to a second network interface further comprises detecting a predefined trigger condition for moving the first connection to the second network interface.

After moving the session the session may be routed via the second network interface to the same destination as before moving the session.

If the first connection on the host side may have assigned the same network address as the connection via the second network interface moving the session from the first network to the second network may be transparent to the host. In other words, the host, in particular higher layer applications in a host, may not realize that a session has been moved or switched between different interfaces. Higher layer applications within the host may still use the same IP address for the connection than before switching, i.e. the address as established.

In order to allow moving connections between network interfaces or networks, a host may at the same time assign the same address to the first network interface and to the second network interface. Thus, in the moment of moving the session, the session can be transferred from one interface to the other without amending the address. Consequently, hitless switching may be possible. Hitless switching may be switching of a session with substantially minimal influence on the service which is using the connection.

A binding cache or a context stored in the network for the session may support a fast establishment of a session and a fast movement of sessions between interfaces.

Alternatively, the IP address may be configured for the first network interface and in the moment of switching the session, the IP address may be transferred to the second interface. In such a case the same IP address may be configured for the first network interface and the second network interface may take over the IP address. However, the same network address may not be assigned at the same time for both network interfaces.

According to yet another aspect of the present invention in the method, the predefined trigger condition may be at least one trigger condition selected from the group of trigger conditions consisting of attaching the second interface to the second network, deterioration of radio signal quality from the remote access network attached to the first network interface, price difference between using a network connected to the first network interface and a network connected to the second network interface, difference of a quality of service parameter between the first and the second network, difference of available bandwidth between the first network and the second network.

According to another aspect of the present invention the host signals to the first network apparatus to which network the host intends to move a session.

Thus, the host may control whether the host wants to use the first network or the second network. The host may detect or measures environmental conditions and thus may be able to decide which network fits to the requirements of the host to fulfil the trigger conditions. The moving of the session however may be controlled by the network.

The host may initiate moving a session from one network interface to the other interface independently from attaching to a new network. Thus, the host may react to amendments of the environmental conditions within the network, which network the host actually uses for a session.

According to a further aspect of the present invention the method further comprises signalling to which network the host intends to move the session by sending a router solicitation message via the corresponding network.

Thus, if the host intends to move the session from the first network to the second network, the host may send a router solicitation message via the second network and vice versa.

According to a further aspect of the present invention the method further comprises signalling to which network the host intends to move the session by the host using the same Interface Identifier in the second network interface, which Interface Identifier was used on the first network interface.

An Interface Identifier may be an address, an IP address, a flag or any other parameter which allows identifying and differentiating the first network interface and the second network interface.

An Interface Identifier may be a parameter or a field in a PBU message or in a PBAck message.

According to a further aspect of the present invention the method further comprises signalling to which network the host intends to move the session by asking or requesting from the network the same IP address to be allocated for the second network interface which IP address has been allocated for the first network interface.

According to yet an other aspect of the present invention asking the network for an IP address for the second network interface further comprises sending at least information based on a layer 2 protocol and/or based on a layer 3 protocol selected from the group of protocols consisting of Internet Control Message Protocol, packet data protocol (PDP) context activation procedures, Dynamic Host Configuration Protocol, Internet Key Exchange protocol and a Mobile IP protocol.

By sending the relevant signalling info on layer 2 and / or on layer 3, the host may also provides the network with information about the host, like the intention of the host to move a session to another interface.

According to a further aspect of the present invention the method further comprises signalling to a first network apparatus, e.g. a MAG, that a connection to a second network has been established after attaching the host to the second network via the second network interface.

Thus, the network comprising the network apparatus may be informed, that the same or a different prefix or address has to be provided to the host dependent on the capabilities of the host.

Alternatively, according to another aspect of the present invention the movement of the session from the first network interface to the second network interface is signalled to a first network apparatus.

Signalling the movement to a first network apparatus may allow the first network apparatus signalling to a second network apparatus the movement of the connection.

The first network apparatus may be a mobile access gateway (MAG). A mobile access gateway may be a function that manages the mobility related signalling for a mobile node that is attached to its access link. The MAG may be responsible for tracking the mobile nodes movement to and from the access link or access network and for communicating and signalling with the mobile node's local mobility anchor (LMA).

The second network apparatus may be the local mobility anchor (LMA). The local mobility anchor may be the home agent for the mobile node in the Proxy Mobile IPv6 domain. It may be the topological anchor point for the mobile node's home network prefix and may be the entity that manages the mobile node's binding state. The local mobility anchor may have the functional capabilities of a home agent as defined in Mobile IPv6 with the additional capabilities, which may be required for supporting Proxy Mobile IPv6 protocol.

The combination of MAG and LMA may provide the network based mobility functionality. Thus, MAG and LMA may form the network, which network manages or administrates the mobility of a host.

A mobile node (MN) may be used to refer to an IP host or router whose mobility is managed by the network. The mobile node may be operating in IPv6 mode, IPv4 (IP version 4) mode or in IPv4/IPv6 dual mode. A mobile node's home network prefix (MN-HNP), prefix or address may be the on-link IPv6 prefix, which may always be present in a router advertisement that a mobile node receives when the mobile node is attached to any of the access links in a Proxy Mobile IPv6 domain.

The home network prefix (HNP) may be topologically anchored at the mobile node's LMA. The MN may configure its interface or network interface with an address from this prefix. The address may be an IP address. If the MN connects to the Proxy Mobile IPv6 domains through multiple interfaces, simultaneously, each of the connected interfaces may be assigned a unique home network prefix and under a different mobility session.

According to a further aspect of the present invention the method for assigning the same network address to a first network interface and to a second network interface in a host further comprises determining information about the host. This information is provided to a network apparatus, wherein the information about the host comprises information about the capability of assigning the same network address to a first network interface and to a second network interface.

The information about the capability of assigning the same network address to a first network interface and to a second network interface may be equivalent to the information about the capability of moving sessions between different interfaces. In other words, a host which is capable to assign the same network address to different interfaces may also be capable to move a connection from one interface to another.

A host may detect whether the host is capable of assigning the same address to different interfaces by reading a corresponding configured register, by reading a hard wired condition or by performing an internal test on the host. The result of such a detection may be communicated to the network apparatus.

A host which provides its capability to assign the same network address to different interfaces may allow informing the network about this capability. The network then may assign only a single network address to a corresponding host.

The first network apparatus may be an MAG which may receive the result of the detection from the host and the MAG may inform the second network apparatus, the LMA.

Thus the network may control the host. However, the host may influence this control by sending the router solicitation message via the corresponding network. The host may send any other layer 2 protocol information, e.g. ICMP information or PDP information, or layer 3 protocol information, e.g. DHCP, Internet Key Exchange information or Mobile IP information, for influencing the network control.

According to another aspect of the present invention providing the information about the capability of allocating the same network address to the first network apparatus comprises setting a flag in a router solicitation message.

The flag in the router solicitation message may also allow providing information about moving a session across interfaces. The flag may be a "P" flag or a prefix option in the router solicitation message. This prefix option in the router solicitation message may allow asking for an address, prefix or an IP address for the second network interface.

Thus, according to an other aspect of the invention asking for an IP address for the second network interface may comprises setting a Prefix option or setting a P-flag in a Router Solicitation message.

A router solicitation message may be a message, which is similar to a keep alive message and may be exchanged between host and the network, in particular between host and MAG. Thus, such messages may be able to transport information about the host to the MAG on regular basis. The MAG then may transfer this information to the LMA. The router solicitation message may be enhanced by a flag, which flag is adapted to signal whether the MN is capable to configure the same network address to different network interfaces. The flag may be called P-flag or Prefix option.

According to another aspect of the present invention providing the information about the host, in particular about the capability of allocating the same network address to the first network apparatus, is based on the IP level.

An alternative possible solution may be the MN informing the MAG about its capabilities and intention to move its IP session across interfaces by using a link layer specific mechanism, which may be based on layer 2 of the OSI (Open Systems Interconnection) model. However, using link layer specific mechanism to communicate between MN and the first network apparatus would require a change to every link layer technology which may be used with the PMIP6 protocol. In other words, a plurality of access technologies like E-UTRAN, UTRAN, GPRS, EDGE, IEEE 802.16 and IEEE 802.11 would have to be adapted. A notification from the MN to the network at the IP layer may prevent adapting layer 2 technologies.

According to yet another alternative aspect the MN informs the MAG about the capabilities of the MN and / or the intention of the MN to move an IP session across interfaces by the MN requesting for allocating the same IP address or the same address for the second network interface, which address the MN has allocated for the first network interface. An MN may inform the MAG on layer 2 of the OSI model, e.g. with Internet Control Message Protocol (ICMP) or 3GPP PDP context activation procedures. According to an other aspect the MN informs the MAG on layer 3 of the OSI model, such as Dynamic Host Configuration Protocol, Internet Key Exchange protocol, Mobile IP, or any other. The MN may generate messages according to a layer 2 or layer 3 protocol or according to the TCP/IP (Transmission Control Protocol/Internet Protocol) protocol. Due to historical and architectural reasons such an alternative may be also applicable for IPv4.

According to an aspect of the invention, the method relates to the IPv6 network architecture.

In the following further aspects of the method for detecting in a network a host which is capable to assign the same network address to a first network interface and a second network interface will be described. These aspects apply also for the method for assigning the same network address to a first network interface and to a second network interface, for the program element, for the host, for the network apparatus for providing network based mobility to a host and for the router solicitation message.

According to another aspect of the present invention the information about the host comprises an information about the intention of the host to move a session to the second network interface, such that after moving the session the session is established via the second network interface.

The host may have to react quickly to amendments to the environmental conditions, e.g. degrading signal quality. Sending an information about the intention to move the connection to the second interface may immediately triggers moving the session to the second interface.

According to a further aspect of the present invention the method for detecting in a network a host which is capable to assign the same network address to a first network interface and a second network interface, communicating the information about the host comprises using a PBU message.

A PBU message may be a Proxy Binding Update message. A binding registration request message may be sent by an MAG to the MN's LMA for establishing a binding between the mobile nodes MN-HNP and the Proxy-CoA (Proxy-Care-Of-Address).

A Proxy care-of-address may be the address configured on the interface of an MAG and may be the transport end point of a tunnel between the LMA and the MAG. The LMA may view this address as the care-of-address of the MN and may register it in a binding cache entry for that MN. The binding cache entry may be the context of a connection established between MN and MAG.

When the transport network or remote access network (RAN) between the MAG and the LMA is an IPv4 network and if the care-of-address that is registered at the local LMA is an IPv4 address, the term IPv4-Proxy-CoA may be used.

A PBU message may be a standard message which is exchanged between MAG and LMA and thus, even if the communication between MN and MAG is adapted in order to detect the capability of the MN to assign the same address to different networks, the communication between LMA and MAG may not have to be amended.

According to another aspect of the present invention the method further comprises receiving in a first network apparatus the information about the host in a router solicitation message.

Furthermore, the method may comprise on receipt of such a router solicitation message setting a corresponding flag in the PBU message.

For signalling the capability of the MN to use the same address for different networks a handover indicator field may be provided within the PBU message.

The MAG may be adapted to read a predefined flag, i.e. the P-flag or the Prefix option, in a router solicitation message and thus detect information about the capability of the host. The MAG may forward to an LMA the information about the detection of the capability of the host to assign the same network address to a first network interface and a second network interface. This information may be coded in the P-flag of a router solicitation message and may be converted to a corresponding code or value in a corresponding handover indicator flag of a PBU message.

The relevant field within the handoff indicator field or handoff indicator option may be called handoff indicator (HI) which may comprise 8 bits. The HI field may contain the value 0, 1, 2, 3, 4 or 5. The value 0 may be reserved. The value 1 may indicate the attachment over a new interface. The value 2 may indicate handoff between two different interfaces of the mobile node. The value 3 may indicate handoff between mobile access gateways for the same interface. The value 4 may indicate handoff state unknown. The value 5 may indicate handoff state not changed (re-registration).

By using the value 2 in the HI field, the MAG may indicate to an LMA that an MN is detected which MN is capable to assign the same network address to different network interfaces or that an MN is detected which MN has the intention to move a session to the second interface. Thus, the LMA may provide the same prefix to the mobile node.

In the following, further aspects of the host will be described. These aspects apply also for the method for assigning the same network address to a first network interface and to a second network interface, for the method for detecting in a network a host, which host is capable to assign the same network address to a first network interface and to a second network interface, for the program element, for the network apparatus for providing network based mobility to a host and for the router solicitation message

According to a further aspect of the present invention the first network interface is based on a first network access technology type and the second network interface is based on a second network access technology type, wherein the first network access technology type differs from the second network access technology type.

The first network interface and the second network interface may be different network interface cards implementing different protocols. The protocols may be access network protocols like WiMAX, WiFi®, 3G, E-UTRAN, UTRAN, GPRS, EDGE, IEEE 802.16 or IEEE 802.11 which may comprise physical definition as well as logical definition according to the OSI model.

According to another aspect of the present invention the routing device further is adapted to detect a predefined trigger condition.

The routing device is further adapted, on the detection of the predefined trigger condition to move the connection to the second network interface, such that after the movement the connection is routed via the second network interface to the destination. Thus, the session may be continued or maintained via the second interface.

According to another aspect of the present invention the routing device is further adapted to signal to a first network apparatus to which network the host intends to move the session. The network is selected from the group of networks consiting of the first network and the second network.

The connection of the host with the second network may be a connection on layer 2 and may differ from a connection or session which the host can move. The latter connection may be based on layer 3 or based on IP level.

According to another aspect of the present invention the host further comprises a detection device, wherein the detection device is connected to the assigning device and wherein the detection device is adapted to determine information about the host. Furthermore, the detection device is adapted to provide information about the host to a first network apparatus, wherein the information about the host comprises information about the capability of assigning the same network address to a first network interface and to a second network interface. The detection device may further be adapted to detect the intention of the host to move a session to an other interface.

In the following further aspects of the network apparatus are described. These embodiments apply also for the method for assigning the same network address to a first network interface and to a second network interface, for the method for detecting in a network a host, which host is capable to assign the same network address to a first network interface and to a second network interface, for the program element, for the host and for the router solicitation message.

According to another exemplary embodiment the communicating device is further adapted to generate a PBU.

The PBU may be used to communicate with an LMA. In the PBU a relevant handoff indicator may be set by the communicating device.

According to yet another aspect of the present invention the receiving device is further adapted to receive the result of a determination of the capability of a host. The result of the determination is coded in a router solicitation message.

The communicating device is further adapted for setting a correspondent flag or field in a PBU message. The corresponding field or flag in order to indicate the capability of a host to assign the same IP address to different network interfaces may be called handover indicator. The handover indicator in the PBU message may correspond to a P-flag or a Prefix option in a router solicitation message.

It has also to be noted that embodiments of the present invention and aspects of the invention have been described with reference to different subject-matters. In particular, some embodiments have been described with reference to apparatus type claims whereas other embodiments have been described with reference to method type claims. However, a person skilled in the art will gather from the above and the following description that unless other notified in addition to any combination features belonging to one type of subject-matter also any combination between features relating to different subject-matters in particular between features of the apparatus claims and the features of the method claims is considered to be disclosed with this application.

These and other aspects of the present invention will become apparent from and elucidated with reference to the embodiments described hereinafter.

Exemplary embodiments of the present invention will be described in the following with reference to the following drawings.

### Brief description of the drawings

Fig. 1 shows a host according to an exemplary embodiment of the present invention.
Fig. 2 shows an MAG according to an exemplary embodiment of the present invention.
Fig. 3 shows a network scenario comprising two hosts each having two network interfaces and moving between different access networks according to an exemplary embodiment of the present invention.
Fig. 4 shows a NETLMM domain with multiple access networks according to an exemplary embodiment of the present invention.
Fig. 5 shows a flow-chart for multi-homed MN moving between different access networks for a better understanding of the present invention.
Fig. 6 shows a router solicitation message comprising a P-flag according to an exemplary embodiment of the present invention.
Fig. 7 shows a flow diagram for a method for assigning the same network address to a first network interface and to a second network interface of a host according to an exemplary embodiment of the present invention.
Fig. 8 shows a flow diagram describing a method for detecting in a network a host which is capable to allocate the same network address to a first network interface and a second network interface according to an exemplary embodiment of the present invention.

### Detailed description

The illustration in the drawings is schematic. In different drawings, similar or identical elements are provided with the same reference numerals.

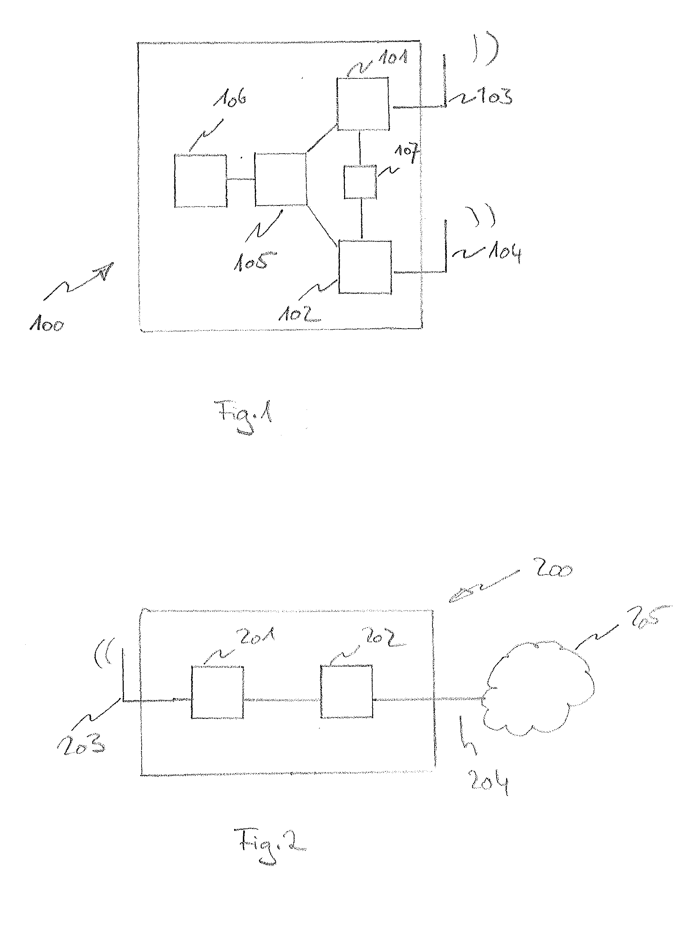

Fig. 1 shows a host 100 according to an exemplary embodiment of the present invention. The host 100, MN 100 or terminal 100 is a mobile unit. The host 100 comprises a first network interface 101 and a second network interface 102. The first network interface 101 is coupled to a first antenna 103 which is configured to remotely connect to an access network. The access network is not shown in Fig. 1. Correspondingly the second network interface 102 comprises a second antenna 104.

The first network interface 101 may be a network interface card and the second network interface may also be a network interface card. The first network interface card 101 supports a different interface technology than the second network interface card 102. The first network interface card 101 may be based on the WiMAX standard, whereas the second network interface card 102 is based on a 3G standard.

The first network interface 101 and the second network interface 102 are connected to the allocation device 105 or assigning device 105. The assigning device 105 is adapted to assign a network address to the first network interface 101 and to the second network interface 102. This assigning device 105 is adapted to assign the same network address, e.g. an IP address, to the first network interface 101 and the second network interface 102. The assigning device 105 allocates or assigns the same network address to the network interface 101 and the second network interface 102 at the same time or at a different time.

The detection device 106 is connected to the assigning device 105. The detection device 106 is adapted to detect whether the host 100 and in particular the assigning device 105 is capable to assign the same network address to the first network interface 101 and a second network interface 102. The detection device 106 may also be adapted to detect the intention to move a session from the first interface 101 to the second interface 102.

Furthermore, connected to the first network interface 101 and the second network interface 102 is the routing device 107. The routing device is adapted to establish or to re-route an established connection or session to a destination in the network attached to the first network interface 101 or to the second network interface 102.

A difference may exist between a connection which is routed via the first interface 101 or the second interface 102 and a physical connection to a remote access network. These connections may be differentiated by the layer of the connection.

The routing device 107, the allocating device 105 or the detection device 106 is adapted to communicate with a network apparatus, e.g. with an MAG via the first interface 101 or via the second interface 102.

In Fig. 1 the host 100 is shown comprising a first interface and a second interface. However, the number of interfaces comprised by a host is not limited to 2. A host may comprise a plurality interfaces. The interfaces may have different types and/or the same interface types.

Fig. 2 shows an MAG 200 according to an exemplary embodiment of the present invention. The MAG 200 or network apparatus 200 comprises a receiving device 201 and a communicating device 202. The receiving device 201 is adapted for receiving messages from the host 100 via the first network interface 101 or the second interface 102.

For example, in order to connect to the first interface 101 or the second interface 102 the MAG comprises the antenna 203. The antenna 203 may be a sending unit comprising an access point (AP). Only for the sake of simplicity in Fig. 2 the sending device is represented by antenna 203.

The receiving device 201 is adapted for receiving router solicitation messages from the host and sending router assignment messages to the host.

The receiving device 201 is connected to the communicating device 202. When the receiving device 201 receives and detects a P-flag in the router solicitation message set to the value 1, the MAG 200 via the communicating device 202 sends a PBU message to a remote LMA. The LMA is not shown in Fig. 2 but may be connected via a backbone network 205 or an edge network 205 to the interface 204. The MAG 200 may operate as a gateway 200, which transforms information provided by the host 100 into a format which the LMA can interpret. For instance, the MAG 200 transforms the information that the host is capable to move a session or an IP session across different interfaces into a message format which can be understood by the LMA.

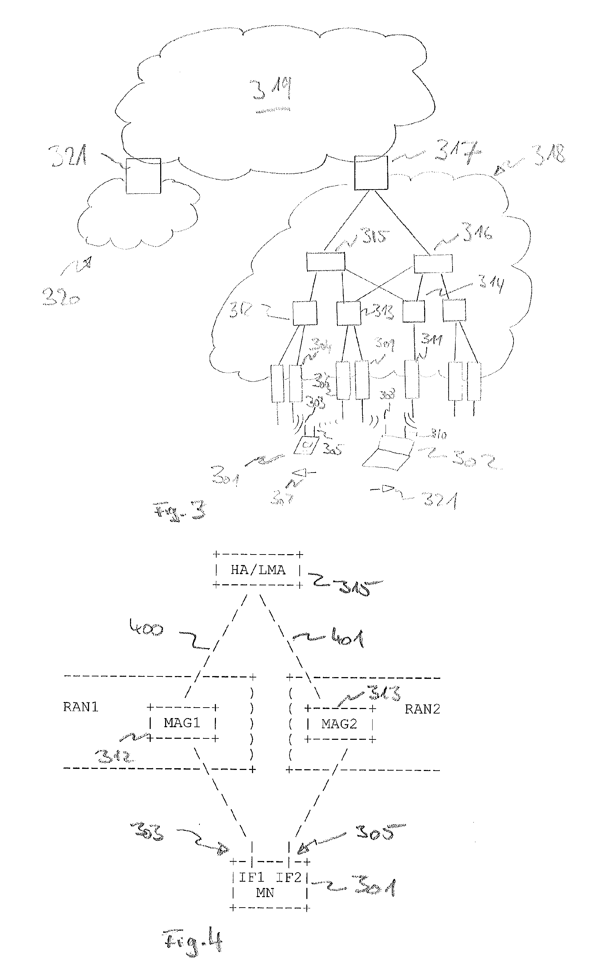

Fig. 3 shows a network scenario comprising two hosts 301, 302 moving between different access networks 304, 306, 309, 311. The host 301 comprises a network interface 303 and/or antenna 303 which physically attaches the host 301 to an access point 304. The interface 303 and the access point 304 can physically connect because both support the same network type. Furthermore, the first host 301 comprises a second interface 305 which physically attaches the host to a second access point 306.

Access point 304 and network interface 303 may be based on the WiMAX standard and access point 306 and interface 305 may be based on 3G standard. As shown by arrow 307 the host 301 moves in the direction of access point 304.

The host 302 comprises the first interface 308 which allows physically attaching the host 302 to access point 309 and the host 302 further comprises the second interface 310 which allows a physical attachment of the host 302 to a remote access network built by access point 311 and MAG 314.

Access point 309 and network interface 308 may be based on the 3G standard and access point 311 and interface 310 may be based on WiMAX standard.

The access points 304, 306, 309, 311 are connected to corresponding MAGs 312, 313, 314. Access point 304 is connected to MAG 312, access point 309 is connected to MAG 313 and access point 311 is connected to access point 314.

The MAGs 312, 313, 314 are connected to LMA 315. MAG 313, 314 are connected to LMA 316.

The LMAs 315, 316 are connected to the IP router 317. The IP router 317, the LMAs 315, 316, the MAGs 312, 313, 314 and the access points 304, 306, 309, 311 form a NETLMM domain 318. The NETLMM domain 318 is connected via router 317 to the Internet 319.

Furthermore, in Fig. 3 a second NETLMM domain 320 is shown which is connected to the Internet 319 by router 321.

A NETLMM 318, 320 domain may comprise several access networks of different types. A host attaching to such a NETLMM domain may have multiple network interface cards (WiFi®, 3G, WiMAX, etc.), one for each different radio access technology.

The connections between LMAs 315, 316 and the corresponding MAGs 312, 313, 314 are realized by tunnels based on IP.

The second host 302 moves in the direction to access point 311 which is shown by arrow 321. Dependent on the location and the distance to the access points 309, 311, the signal quality may be influenced.

The hosts 301, 302 may be a notebook, a laptop, a PDA, a mobile phone etc. Since the hosts 301, 302 are moving and comprise network interfaces 303, 305, 308, 310 whose technology may differ, the hosts may be connected to two access networks at the same time.

An access network, remote access network or RAN may be formed by MAG 312 in combination with access point 304 which connects to the first interface 303 of host 301. A second RAN is formed by MAG 313 in combination with access point 306 which is connected to interface 305.

The access point 304, 306, 309, 311 primarily realize the physical network connections, which may also comprise the link layer of the access network.

A host 301, 302 attaching to a NETLMM domain 318, 320 may have multiple network interface cards 303, 305, 308, 310 based on different network types like WiFi®, 3G, WiMAX, etc. One objective of the NETLMM protocol may be that a host 301, 302 roaming in a NETLMM domain 318, 320 is provided with IP session continuity in a manner transparent to the host. In other words, the mobile node 301, 302 or terminal 301, 302 or host 301, 302 believes it is always attached to the same link, which obtained its initial address configuration even after changing its point of attachment or its location in that network. In this context a link may be a remote link or a wire-based link.

The host 301, 302 while moving from one access network to the other may believe that it is always on the same link as long as it contains one network interface from the same technology as the access network.

However, if the host is equipped with multiple network interface cards 303, 305, 308, 310 and if the NETLMM domain comprises several access networks of different technology types 304, 306, 309, 311 a different scenario may exist.

Such a scenario in detail is shown in Fig. 4. Fig. 4 shows the host 301 or MN 301 which is attached to MAG1 312 and MAG2 313. MAG1 312 and access point 304 form the remote access network 1 or RAN1, wherein access point 304 is not shown in Fig. 4. MAG2 313 in combination with access point 306 form the remote access network RAN2. Access point 306 is not shown in Fig. 4.

The host 301 is connected to RAN2 via interface IF2 305 and host 301 is connected to RAN1 via interface IF1 303. RAN1 as well as RAN2 are connected to home agent (HA) or LMA 315.

RAN1 is connected to LMA 315 via tunnel 400, which is established between LMA 315 and MAG1 312. RAN2 is connected to LMA 315 via tunnel 401, which is established between LMA 315 and MAG2 313.

It should be assumed that host 301 first attaches to the NETLMM domain via MAG1 312 located in the access network RAN1. When the host 301 moves, the host 301 may reach an area or a location covered by the access network RAN2 and the host 301 may decide to attach to the new network RAN2. The decision to switch to RAN2 may depend on the implementation and may be made on the basis of a number of different reasons. The reasons may be environmental conditions such as deteriorating radio signal quality from network RAN1 or other policy reasons like price, quality of service, available bandwidth which may differ between the access networks RAN1 and RAN2.

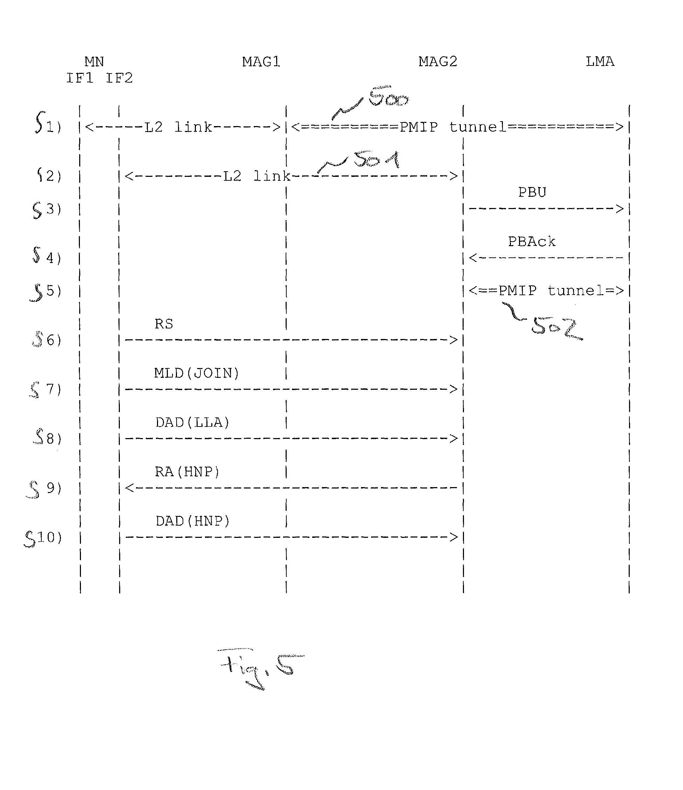

For a better understanding of the invention Fig. 5 is provided. Fig. 5 shows a flow-chart for multi-homed hosts moving between different RANs. The vertical lines named as MN comprising interface IF1 and interface IF2, MAG1, MAG2 and LMA describe the location of the host, the MAG1, the MAG2 and the LMA respectively.

Fig. 5 shows how an attachment procedure to RAN2 will happen. In other words, Fig. 5 shows the procedure for switching a session from the previous access network RAN1 represented by MAG1 to the new network RAN2 represented by MAG2. The reason for switching from MAG1 to MAG2 may be at least one of the above-mentioned conditional reasons or policy reasons. For this example a legacy host or unmodified host is assumed to be moving between MAG1 and MAG2. The different protocol steps are shown in Fig. 5, which are executed in order to preserve continuity of the IP session of the host. A legacy host may not be capable to assign the same address to different interfaces.

In step S1 the host is attached with a layer 2 link to MAG1 with the first interface IF1 of the host. PMIP6 tunnel 500 is established between MAG1 and LMA.

In step S2 the host attaches to MAG2 via a second interface IF2, indicated by the link up message or layer 2 link 501. The link up message or setup of a layer 2 link may trigger a plurality of actions. The link up message is generated when the host attaches to MAG2. At the same time the host still is attached to MAG1.

In step S3 a link establishment event triggers MAG2 to send a PBU message to the LMA. MAG2 indicates the access technology type in the PBU by amending the access technology type field of the PBU message according to the relevant technology type. Furthermore, the MAG2 sets a handoff indicator option in the PBU message to the value 4: Handoff state unknown. Value 4: Handoff state unknown is chosen because the legacy host does not provide to the MAG2 an indication that the host is capable of switching connection between different interfaces. This legacy host which in step S3 is about attaching to MAG2 is not able to provide any hint as to how the handoff indicator should be set.

In step S4 the LMA detects an existing binding of the host with the LMA. This binding is shown in Fig. 5 by tunnel 500. The binding 500 or tunnel 500 contains an access technology type which is different from the one received in the PBU message of step S3.

If the LMA wants to give the host MN a chance to move its existing IP session or IP sessions to a new interface the LMA sends the already existing HNP prefix from the cache entry belonging to the binding 500 of the host.

The LMA however, only gives the host the chance to move the existing session if the LMA in advance has been informed that the host is capable of switching an existing IP session or if the LMA in advance has been informed that the host is capable of assigning the same address to different interfaces.

Thus, in the present case of Fig. 5, where a legacy host tries to connect to the LMA via two interfaces which are based on different access technologies, the LMA returns a different HNP to the host instead of the same HNP. The LMA returns the different HNP by the PBAck message (Proxy Binding acknowledgement) or PBA message. A PBAck message is a binding registration reply message sent by an LMA in response to a PBU request message and the LMA received from a MAG.

Since the LMA returns a different HNP the host has to configure an address for the second connection, which address is different from the address configured on the interface to MAG1 as shown in step S5. Thus, the host may not be able to move its IP session from a first interface to the second interface. In step S5 a tunnel 502 between MAG2 and LMA is established. The LMA may no longer retain the tunnel to MAG1 500.

In step S6 the host sends a router solicitation message RS to MAG2. Sending the RS message is triggered by step S2 and the host connects via the second interface to MAG2.

Also triggered by step S2 the host sends a MLD (join) report message to join the solicited node multicast group. MLD is a Multicast Listener Discovery. Each host attaching to a link may immediately join a specific multicast group. The MLD message supports joining a multicast group.

In step S8, which is also triggered by step S2, the host autoconfigures a link local address and starts a DAD process (Duplicate Address Detection). A Link Local IPv6 Unicast Address may be an address which an IPv6 host always configures for the host when the host attaches to a link. This address may only be used for a communication on the link. Uniqueness of the selected link local address must be checked with DAD.

Step S9 is triggered by the PBAck message received from MAG2 in step S4 or generally step S9 is triggered by step S4. MAG2 advertises the HNP to the host MN. In step S10 the host autoconfigures the address based on the HNP prefix received in the RA (router advertisement) message.

Although the advertised prefix is the same on both interfaces the address autoconfigured by the host on the interface connected to MAG2 is different from the address configured on the interface connected to MAG1. Although the tunnel MAG1-LMA may not exist any more, the MN is still connected to MAG1 and the MN's IP address on its link to MAG1 was not invalidated. However, the MAG1 does not know that the tunnel was moved to the MAG2. The LMA may need to send a Binding Revocation message to invalidate the MN's address at the MAG1. Thus, the legacy host can be supported by complying with the basics of IP networking. In IP networking usually an IP address may not be assigned to more than one interface.

The host starts a DAD procedure for its newly configured address. In other words, the tunnel 500 may not be explicitly released As soon as the LMA accepts the PBU message from the MAG2, it moves the tunnel endpoint to the MAG2, albeit the MAG1 is not informed of this.

The LMA may send the Binding Revocation message to the MAG1. The Binding Revocation message may be adapted to inform the MAG1 that the MAG1 should not provide the PMIP service to the MN any more. The tunnel 500 between the MAG1 and LMA may not be properly removed as a result of the Binding Revocation message, because this tunnel 500 is a shared tunnel carrying the traffic of all MNs attached to MAG1 and registered with LMA. So the tunnel 500 would may only be removed when the last MN registered at the LMA leaves the MAG1.

The precondition for the (legacy) host to move an IP session from one interface to another interface may not be fulfilled for a legacy host. A legacy host may not be able to configure the same IP address for at least two interfaces. An unmodified legacy host may not be able to move an IP session between two interfaces even if the same prefix is available on both access networks.

The host or MN may still have connectivity to MAG1 and may still send packets via the interface connected to MAG1 and via MAG1 to the LMA using the first tunnel 500. If the LMA receives packets via the first tunnel 500 when at the same time the second tunnel 502 is established, the LMA will drop the packets since in the binding cache entry of the LMA the authorized tunnel service now is MAG2. The binding cache stores the context of a valid connection from the host via the LMA. Any packets the host wants to transmit over MAG1 are dropped by the network, in particular by the LMA, and no indication that the packets are dropped will be sent to the host.

Thus, it may not be allowed that the LMA returns the same HNP to a MAG in a different access network unless the LMA is sure that the MN is capable of handover across interfaces. In other words, the LMA which has not received a handoff indicator value 2 may not send the same HNP to two different MAG at the same time.

The LMA relies on the handover indication to know that the MN is capable of moving an IP session across interfaces. In case that the access technology type in the PBU message in the field access technology type is different from the access technology type which is saved in the binding cache entry the LMA will know that the MN is attached to MAG2 over a different interface. In this case, the LMA may return the same HNP only if a handoff indicator of the former PBU message indicates that the host is capable to handoff between two different interfaces.

The MAG may be responsible to provide the corresponding handoff indication by using the PBU message. The MAG knows the corresponding value for the handoff indication by receiving the information from the host. Consequently, a host, which wants to retain the IP address of the host when the host moves the session from one access network to another in a NETLMM domain, may be enhanced with a functionality, which allows the host to support moving of an IP session across a plurality of interfaces. Furthermore, such a host is adapted to detect that the host is located in a NETLMM domain, i.e. the host realizes whether an additional network supports network based mobility when the host connects to the additional network which is based on a different access technology then the already connected networks. Furthermore, such a host may be adapted to indicate to a corresponding MAG that the host is capable to support moving an IP session or a plurality of IP sessions across interfaces.

In the following some examples are provided how a host can indicate to the network, in particular to the MAG and LMA, that the host is capable to assign different address to different interfaces and moving an IP session across the interfaces.

According to one aspect of the present invention the network or MAG can indicate to the host that the network is providing a NETLMM service by extending the router advertisement message. Thus, a host can detect that the host is joining a NETLMM domain. The router advertisement message may be extended to carry the information about the availability of the NETLMM service. Thus, joining a NETLMM domain is indicated on an IP layer. An IP layer-based mechanism may allow that this mechanism is available irrespective of the link layer technology and may not require the support or modification of an underlying link layer.

The mechanism using router advertisement may be backward compatible with legacy hosts and may be independent on link layer technology.

However, according to another aspect of the present invention, an indication that the host is joining a NETLMM domain may also be based using link layer technology. A link layer technology used in a NETLMM domain may be extended to carry the indication of the availability of the NETLMM service. This approach may enable the host to learn the networks NETLMM capability during the link setup phase. However, such mechanism may require amendments in the underlying link layer technologies and may be based on a tight coupling between IP and link layer.

According to a further aspect of the present invention a possibility of indicating the joining of a NETLMM domain is by advertising the same prefix in different access networks. If the host receives router advertisement messages over different interfaces for example the first interface 303 and the second interface 305 carrying the same prefix, the host may be adapted to interpret the reception of the same prefix via two interfaces as an indication of the NETLMM service availability in the network. Such an indication may be an implicit indication. Such a solution may not differentiate between a NETLMM domain and multilink subnets. However, a requirement of changes to messages may be reduced.

In the following some embodiments are provided which show how a host may communicate the NETLMM capability or the NETLMM enhancement of the host to the network.

According to an aspect of the present invention, when the host which is roaming in a NETLMM domain decides to move an IP session from one access network to another, the host may inform the network about the capability of the host to move IP sessions across interfaces. In other words, when the host detects that a new network interface is available, i.e. an additional network interface is attached to an additional access network based on a different network type, the host may inform the network about the capability of the host to move IP sessions across interfaces.

The host may also inform the network about the intention of the host to move IP sessions across the interfaces. The MAG uses such an indication received from the host to fill in the handoff indicator option in the PBU message which is then sent to the LMA.

For indicating the NETLMM capability of a host to the network the router solicitation message may be extended. A router solicitation message can be extended with an additional flag, which flag when set to a predefined value indicates the capability of the host to move a network connection or a session or an IP session across different interfaces. Furthermore, the flag when set to a predefined value indicates that the MN want to move an IP session across interfaces. The deployment of a router solicitation message may require that the MAG waits for a router solicitation message from the host before the MAG can send a PBU message to the LMA with the corresponding handoff indicator. For example, the handoff indicator has the value 2. The sending of the PBU message as a further exemplary embodiment may be triggered by a link establishment event, i.e. an event, which is triggered when an interface attaches to a network.

The extension of the router solicitation message may provide an explicit indication. The extension of the router solicitation message may also be backward compatible with a legacy host and may be independent of the link layer. Furthermore, the extension of the router solicitation message may prevent changes to already deployed equipment, i.e. the installed base.

According to another aspect of the present invention, in order to signal to the network that a host is capable of moving IP sessions across interfaces an underlying link layer can be extended to carry the indication of the host's NETLMM capability to the MAG. The MAG may represent the network. An extension of the link layer may introduce tight coupling between the IP layer and the link layer and may require amendments to the link layer technology used with the PMIP6 protocol.

According to another aspect of the present invention, a possibility to signal to the network the capability of the host to move IP sessions between different interfaces is to use the same interface identifier across different access networks. An interface identifier option may be defined for the PBU or PBAck message between MAG and LMA. A host may use the same interface identifier in at least two access networks which the host is attached to by at least two interfaces. The two access networks may be based on different access technology. If the host wants to move its IP session across interfaces the host may use the same interface identifier in both or all of the access networks.

A MAG in a new access network is assumed to acquire the host's interface identifier during the link establishment phase through link specific mechanisms. A MAG is also assumed to obtain an interface identifier that the host was using at the previous MAG and the access technology type through context transfer between MAGs or some other mechanisms. If the access technology type is different and the interface identifier is the same in both access networks thenthe MAG may detect an indication of the host to signal to the MAG that the host is capable to assign the same address to different interfaces and that the host has the intention to move IP sessions across interfaces.

The MAG may set the handoff indicator field in the PBU message to the value "2: handoff between two different interfaces of the mobile node". This aspect may partly be based on a link layer as the MAG learns the hosts interface identifier during the link layer establishment. It is mentioned that maybe link layers exist which do not allow MAC (Medium Access Control) address negotiation and where the MAC address assigned to the device is authenticated by a certificate. Thus, a MAC address may not be changed. One example of such link layer is IEEE 802.16 and IEEE 802.16e.

According to another aspect of the present invention, a possibility to signal to the network the capability of the host to move IP sessions between different interfaces is for the host to specifically request allocation of the same IP address for the second network interface which IP address was allocated for the first network interface.

A Host can ask the network to allocate the same IP address for the second interface by using layer 2 protocols such as Internet Protocol Control Protocol, Internet Message Control Protocol or 3GPP specified PDP context activation protocols, or by using existing layer 3 protocols such as Dynamic Host Configuration Protocol, Internet Key Exchange protocol, Mobile IP, or any other protocol on any other layer that allows the host to specifically ask for network to allocate specific IP address to the host.

A method by which a host can request a specific IP address from the network could be defined based on a Router Solicitation message. A Router Solicitation message frame could be extended with a Requested Prefix option or a P-flag which would allow the Router Solicitation message sent by the MN to carry the requested IP address. The Router Solicitation option carrying the IP address could base on the layout of the Prefix Information of a Router Advertisement message.

From the host's action of specifically asking for the same IP address for the second network interface, the MAG or LMA can conclude that the host is capable of allocating same IP address for multiple interfaces. The Prefix option or flag in the Router Solicitation message may allow a MAG and/or a LMA to understand that there is a special meaning on a request for an allocation of an IP address, in particular for the request for the allocation of the same IP address for a second interface as for the first interface.

Networks which are not part of the same NETLMM domain may ignore host's request for special IP address and those networks may give the host a different IP address than the host asked. If a host receives a different address than the IP address as requested the host may conclude that it is not possible to move sessions from a first access network to a second access network. The host may conclude, that the network does not support such movements.

The Prefix option in a Router Solicitation message is a layer 3 mechanism, which may also support IPv6.

In the following a possible implementation for moving an IP session across interfaces will be described.

According to a further aspect of the present invention a host initiates the PMIP6 handover across interfaces by sending a router solicitation message with a flag indicating that the host wants to move an IP session across interfaces. The PMIP6 handover may move a session across interfaces. The access network to which the host intends to move a session is called the target access network. The target access network to which the IP session will be moved is the access network where the router solicitation message was sent. The MAG may respond with the router advertisement message containing NETLMM specific extensions.

The host may detect that the host is in a NETLMM domain, i.e. that the host is attached to a NETLMM domain, by looking for a extension flag in a flag expansion option in a router advertisement message. If during the initial network attachment the host detects that the host is attaching to a NETLMM, i.e. the N flag is set, the host may instantiate a virtual interface and associate the virtual interface with a physical interface used to attach to the network.

The address configured using the HNP from the router advertisement message may not be assigned to the physical interface used to attach to the NETLMM domain. Instead, the address may be assigned to the virtual interface. Any packets that the host sends over this virtual interface may be delivered to the network via the associated physical interface. Any packets the host receives over the physical interface may be delivered to the IP layer over the associated virtual interface.

When the host attaches to the NETLMM domain over the second interface of the host, the host may send a router solicitation message over the second interface. A router solicitation message may include an indication that the host wants to move an IP session across interfaces. If the router advertisement message indicates that the network supports NETLMM service and the HNP advertised in the router advertisement message may be the same HNP, which the host is using on the virtual interface, the MN may associate the virtual interface with the newly configured physical interface. Switching the association of the virtual interface to an association to the newly configured physical interface accomplishes the movement of IP sessions from one access network to another preserving the IP session.

After associating the virtual interface with the newly configured physical interface, the host may shut down the physical interface previously associated with the virtual interface.

The MN may decide to remain attached at a link layer to both access networks. In such case the MN can move its IP sessions back and forth between the two access networks without first performing a network entry in the target access network. In order to initiate the switch of its IP sessions to another access network, the MN may send a router solicitation message in the target access network and the flag requesting the movement of IP sessions in the router solicitation message is set.

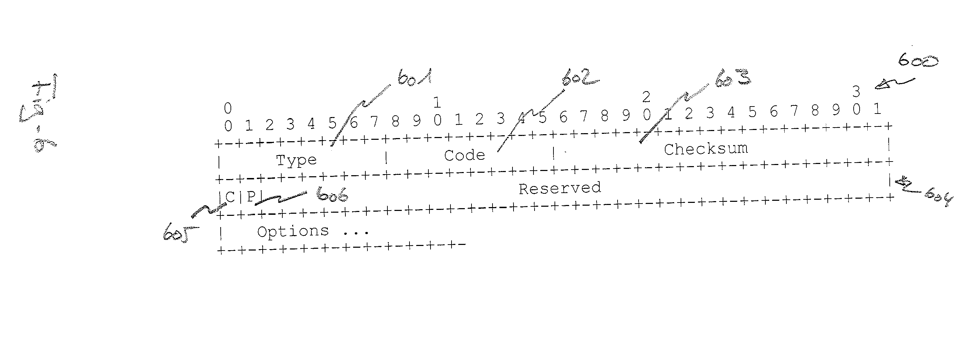

Fig. 6 shows a router solicitation message comprising a P-flag according to an exemplary embodiment of the invention. The router solicitation message comprises a plurality of rows, whose broadness is 32 bit, wherein a position within the router solicitation message is indicated by the bit number 600. The router solicitation message comprises ICMP fields (Internet Control Message Protocol).

The first field is the type field 601, which comprises the value 133.

Arranged next to the type field the router solicitation message comprises the code field 602 which comprises the value 0.

Bits 16 to 31 form an ICMP checksum 603.

Succeeding the checksum, 8 reserved bits 604 are arranged within the router solicitation message, wherein the bit 32 605 is the C-flag. A set C-bit (C bit has the value true) indicates that the host is capable of performing its own mobility management.

The reserved bits comprise bit 33, which is called the P-flag 606. The P-flag is arranged next to the C-bit 32.. If the P-flag is set it indicates that the host supports the NETLMM specific enhancements according to an aspect of the present invention. In particular, by setting the P-flag the sending node indicates that the sending node or host is capable of moving its IP session across interfaces or that the host is capable to assign the same address to different interfaces.

Additionally, the host, which sets the P- flag should also support the "N" flag in a router advertisement message. Access routers and MAGs not supporting the P flag will ignore the P-flag. Thus, backward compatibility issues may be prevented.

The possibility of moving sessions across interfaces may enable the enhanced host to retain IP session continuity as it handoffs between different interfaces.

Furthermore, an implementation may be independent of the underlying link layer technology. The host may be able to explicitly indicate to the MAG its support for moving of IP sessions across different interfaces. Based on the explicit indication from the host, the MAG may be able to set the handoff indicator option to the corresponding value.

The MN may send the router solicitation messages immediately upon attaching or physically connecting to a new link as one of the first messages. So the amount of time by which the PBU is delayed may be short.

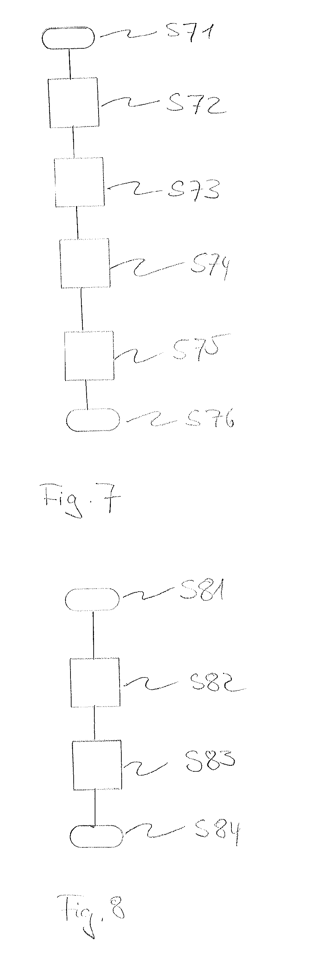

Fig. 7 shows a flow diagram for a method for allocating the same network address to a first network interface and to a second network interface of a host according to an exemplary embodiment of the present invention. In step S71 the method is initiated. In step S72 a host physically connects or attaches to a first network via a first network interface. In step S73 the host physically connects to a second network via a second network interface. In step S74 a network address is allocated to the first network interface and in step S75 the same network address is allocated to a second network interface. The method terminates in step S76.

Fig. 8 shows a flow diagram describing a method for detecting in a network a host, which is capable to allocate the same network address to a first network interface and a second network interface according to an exemplary embodiment of the present invention. The method is initiated in step S81. In step S82 the network receives an indication from a host whether the host is capable to allocate a network address to a plurality of interfaces. In other words information is provided, whether the host is capable to move an established session across interfaces. In step S83 the first network apparatus communicates the indication to a second network apparatus. The first network apparatus and the second network apparatus may form the network. The method is terminated in step S84.

In the following the operation of a host or mobile node will be described.

When the mobile node wants to move IP sessions of the host from one interface to another one, the mobile node may send the router solicitation message in the target access network with the P flag set. If the router advertisement message received in response does not contain the same HNP that the MN is already using for its IP sessions in the current access network, then the target access network may not support handovers across interfaces and the MN may not move its IP sessions to a target interface.

The P flag in a router advertisement message triggers the PMIP6 handover between access networks. Unless the MN wants to initiate the PMIP6 handover it may not set the P flag in a router solicitation message or sets the value of the P flag to 0.

If the MN already initiated the PMIP6 handover and the MN receives a router advertisement message in a previous access network revoking the HNP (prefix lifetime set to 0), the MN may not immediately invalidate the addresses configured with the HNP. In other words, the host may wait a predefined time before the host invalidates a configured address.

Instead, the MN may wait for a router advertisement from a target access network. If the router advertisement from a target network contains the HNP with a lifetime value different from zero, the MN may continue to use the addresses based on HNP in the target access network.

In the following the operation of the MAG is described.

When the mobile node attaches to a MAG, the MAG may delay the sending of an initial PBU message until the MAG receives a router solicitation message from the mobile node. If the P flag in the received router solicitation message is not set, the MAG may send a standard PBU message. In other words, in that case all values for the handoff indictor may be used except value "2: Handoff between two different interfaces of the mobile node".

A flag may be set if the flag has a value of 1 or a value of true.

When the MAG receives a router solicitation message with a P flag set, the MAG sends a PBU message to the LMA setting the handoff indicator option to the value "2: Handoff between two different interfaces of the mobile node".

In the following the operation of a LMA is described.

When the LMA receives a PBU message with a handoff option indicating handover or movement across interface, the LMA may send a binding revocation message to the previous MAG.

A Binding Revocation message is a message sent while terminating a mobile node's mobility session. A Binding Revocation message can be applied in a client based as well as in a network based mobility management protocol.

According to an aspect of the present invention support for IPv4 and IPv6 is provided.

According to an aspect of the present invention the method used by the host comprises communicating the ability or the capability of setting the same IP address for multiple interfaces may differ in an IPv4 network and in an IPv6 network. For example, in an IPv6-domain, a host may use a Router Solicitation message, whereas in an IPv4-domain the host may ask for the same IP address with layer 2 or layer 3 mechanisms.

Thus, according to an aspect of the present invention the host detects whether the network is an IPv4 network or an IPv6 network and the host selects the method for assigning the same network address to different interfaces accordingly.

Different physical interfaces can have different MTU size (Maximum Transmission Unit) for IP packets. Changes in the MTU size may affect the existing IP sessions. When the MN moves the IP sessions established by the host to another access network, the link MTU size may changes. Likewise, the MN may assume that the path MTU, i.e. the MTU size of the corresponding path, changes whenever the access network is changed.

The MN may internally implement a functionality that is needed for moving sessions from the first network interface to the second network interface by creating a virtual network interface. The virtual network interface is bound to the interface of the selected access network. In a first step the virtual network interface is bound to the first network interface. However, when the MN moves, the MN updates or actualizes the binding of the virtual network interface to bind the virtual network interface to the second network interface. Changing of the binding of the virtual network interface from the first access network interface to the second access network interface transparently moves sessions that are using the virtual network interface from one access network interface to another.

If the MN assigns the addresses based on the HNP to a virtual interface, the MN sets the MTU size of the virtual interface to the link MTU of the physical interface associated with the virtual interface. When a physical interface associated with a virtual interface is changed, the MTU of the virtual interface may also be updated to the MTU of the new physical interface.

It may happen that the multi-interface MN (i.e. a MN comprising a plurality of interfaces) looses the connection with the current access network before the MN is able to establish a new connection with a target access network. This scenario may be called "zero physical interfaces". Such situation is transient in nature.

When the MN roaming in a NETLMM domain looses its connection with the current access network (link-down event), the MN may not immediately after loosing the connection invalidate the addresses based on the HNP and tear down the virtual interface. In other words, the MN may wait a predefined time before the MN invalidates the addresses based on the HNP and tears down the virtual interface.

Instead, the MN may perform a network scan over all physical interfaces looking for a suitable network to attach to. If the MN finds alternative access networks, the MN may attach to at least one of the networks found by the scan and use the inventive mechanism to handoff IP sessions from the previous access network.

If the MN is not able to configure the same HNP in a new access network, then the MN may release all addresses based on HNP and all related IP sessions. Such a release may happen if there are no longer networks in range of the MN, which networks the MN has access to, or if none of the available networks is part of the same NETLMM domain where the existing HNPs were from.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

### Acronyms and Terminology

- AAA: Authentication, Authorization and Accounting
- BAck: MIP6 Binding Acknowledge message
- BU: MIP6 Binding Update message
- CoA: MIP6 Care-of Address
- DHCP: Dynamic Host Configuration Protocol
- HA: Home agent
- host: IPv6 node
- LMA: Local Mobility Anchor
- MAG: Mobility Access Gateway
- MIP: Mobile IP
- MN: Mobile Node
- netlmm: Network localized mobility management
- PBAck: PMIP6 Proxy Binding Acknowledge message
- PBU: PMIP6 Proxy Binding Update message
- PMIP: Proxy Mobile IP
- PMIP6: Proxy Mobile IPv6
- RAN: Radio Access Network
- SA: Security Association

## Claims

1. Method for assigning the same network address to a first network interface (101, 303, 308) and to a second network interface (102, 305, 310) of a host (100, 301, 302), the method comprising:
Attaching the host (100, 301, 302) to a first network (RAN1) via the fist network interface (101, 303, 308);
Assigning a network address to the first network interface (101, 303, 308);
Establishing a session via the first network interface (101, 303, 308);
Attaching the host (100, 301, 302) to a second network (RAN2) via the second network interface (102, 305, 310);
Assigning the same network address to the second network interface (102, 305, 310);
Moving the session from the first network interface (102, 305, 310) to the second network interface (102, 305, 310), such that the session is continued via the second network interface (102, 305, 310).

2. Method of claim 1, wherein the first network interface (101, 303, 308) is based on a first network access technology type; and
wherein the second network interface (102, 305, 310) is based on a second network access technology type;
wherein the first network access technology type differs from the second network access technology type.

3. Method of claim 1 or 2 further comprising:
Detecting a predefined trigger condition for moving the session to the second network interface (102, 305, 310).

4. Method of claim 3, wherein the predefined trigger condition is at least one trigger condition selected from the group of trigger conditions consisting of attaching the second interface (102, 305, 310) to the second network (RAN2), deterioration of radio signal quality from the remote access network attached to the first network interface, price difference for using a network (RAN1, RAN2), difference of a quality of service parameter in a network (RAN1, RAN2) and difference of available bandwidth in the first network and in the second network.

5. Method of one of claims 1 to 4, further comprising:
Signalling to a first network apparatus (312, 313) to which network (RAN1, RAN2) selected from the first network (RAN1) and the second network (RAN2) the host (100, 301, 310) intends to move the session.

6. Method of claim 5, further comprising:
Signalling to which network (RAN1, RAN2) the host intends to move the session by sending a router solicitation message via the corresponding network (RAN1, RAN2).

7. Method of claim 5, further comprising:
Signalling to which network (RAN1, RAN2) the host intends to move the session by using the same Interface Identifier in the second network interface which Interface Identifier was used in the first network interface.

8. Method of claim 5, further comprising:
Signalling to which network (RAN1, RAN2) the host intends to move the session by requesting from the network the same IP address to be allocated for the second network interface, which IP address has been allocated for the first network interface.

9. Method of claim 8, wherein requesting an IP address for the second network interface further comprises sending at least information at least based on a layer 2 protocol and/or based on a layer 3 protocol selected from the group of protocols, consisting of Internet Control Message Protocol, Internet Protocol Control Protocol, packet data protocol context activation procedures, Dynamic Host Configuration Protocol, Internet Key Exchange protocol and Mobile IP.

10. Method of one of claims 1 to 9 further comprising:
Determining information about the host (100, 301, 302);
Providing information about the host (100, 301, 302) to a first network apparatus (312, 313);
wherein the information about the host (100, 301, 302) comprises information about the capability of assigning the same network address to a first network interface (101, 303, 308) and to a second network interface (102, 305, 310).

11. Method of claim 10, wherein providing information about the host (100, 301, 302) comprises at least one method selected from the group of methods of providing information about the host, the group consisting of Setting a flag in a router solicitation message, requesting an IP address for the second network interface on layer 2 and requesting an IP address for the second interface on layer 3.

12. Method for detecting a host (100, 301, 302) by a network, which host is capable to assign the same network address to a first network interface (101, 303, 308) and to a second network interface (102, 305, 310), the method comprising:
Receiving in a first network apparatus (312, 313) information about the host (100, 301, 302);
Communicating the information about the host (100, 301, 302) to a second network apparatus (315, 316);
wherein the information about the host (100, 301, 302) comprises information about the capability of assigning the same network address to a first network interface (102, 305, 310) and to a second network interface (102, 305, 310).

13. Method of claim 12, wherein the information about the host comprises a information about the intention of the host (100, 301, 302) to move a session to the second network interface (102, 305, 310), such that the session is continued via the second network interface (102, 305, 310).

14. Method of claim 12 or 13, wherein communicating the information about the host (100, 301, 302) comprises communicating the information about the host (100, 301, 302) in a PBU message.

15. Method of one of claims 12 to 14, further comprising:
Receiving the information about the host (100, 301, 302) in a router solicitation message.

16. Method of claim 15, wherein the information about the host is coded within a P-flag of the router solicitation message.

17. Program element for assigning the same network address to a first network interface (101, 303, 308) and to a second network interface (102, 305, 310) of a host (100, 301, 302) and/or for detecting by a network a host (100, 301, 302), which host (100, 301, 302) is capable to assign the same network address to a first network interface (101, 303, 308) and to a second network interface (102, 305, 310), which program element, when being executed by a processor, is adapted to carry out at least one of the method of one of claims 1 to 7 and/or the method of one of claims 8 to 12.

18. Host (100, 301, 302), comprising:
a first network interface (101, 303, 308);
a second network interface (102, 305, 310); and
an assigning device (105);
a routing device (107);
wherein the routing device (107) is connected to the first network interface (101, 303, 308) and to the second network interface (102, 305, 310);
wherein the assigning device (105) is connected to the first network interface (101, 303, 308) and to the second network interface (102, 305, 310);
wherein the assigning device (105) is adapted for assigning the same network address to the first network interface (101, 303, 308) and to the second network interface (102, 305, 310);
wherein the first network interface (101, 303, 308) is adapted to attach the host to a first network (RAN1);
wherein the second network interface (102, 305, 310) is adapted to attach the host to a second network (RAN2)
wherein the routing device (107) is adapted to establish a session via the first network interface (101, 303, 308); and
wherein the routing device is adapted to move the session to the second network interface (102, 305, 310), such that the session is continued via the second network interface (102, 305, 310).

19. Host (100, 301, 302) of claim 18,
wherein the routing device (107) is adapted to detect a predefined trigger condition for moving the session to the second network interface (102, 305, 310).

20. Host (100, 301, 302) of claim 18 or 19, wherein the routing device (107) is further adapted to signal to a first network apparatus (200, 312, 313) to which network (RAN1, RAN2) selected from the first network (RAN1) and the second network (RAN2) the host intends to move the session.

21. Host (100, 301, 302) of one of claims 18 to 20, further comprising:
a detection device (106);
wherein the detection device (106) is connected to the assigning device (105);
wherein the detection device (106) is adapted to determine information about the host (100, 301, 302);
wherein the detection device (106) is adapted to provide information about the host (100, 301, 302) to a first network apparatus (200, 312, 313);
wherein the information about the host (100, 301, 302) comprises information about the capability of assigning the same network address to a first network interface (101, 303, 308) and to a second network interface (102, 305, 310).

22. Network apparatus (200, 312, 313) for providing network based mobility to a host (100, 301, 302), comprising:
a receiving device (201);
a communicating device (202);
wherein the receiving device (201) is connected to the communicating device (202);
wherein the receiving device (201) is adapted to receive in the network apparatus (200, 312, 313) information about a host (100, 301, 302);
wherein the communicating device (202) is adapted to communicate the information about the host (100, 301, 302) to a second network apparatus (315, 316);
wherein the information about the host (100, 301, 302) comprises information about the capability of assigning the same network address to a first network interface (101, 303, 308) and to a second network interface (102, 305, 310).

23. Router solicitation message, comprising a value at the position of a P-flag;
wherein the value indicates that a host (100, 301, 302) is capable to assign the same network address to a first network interface (101, 303, 308) and to a second network interface (102, 305, 310).
